# DEMANDE DE BREVET EUROPEEN

(11) **EP 4 391 131 A1**
(43) Date de publication de la demande: **26.06.2024**
(21) Numéro de dépôt: 23214075.6
(22) Date de dépôt: 04.12.2023
(51) Int. Cl.: H01M 10/04, H01M 50/105, H01M 50/178, H01M 50/211, H01M 50/249, H01M 50/264, H01M 50/289, H01M 50/296, H01M 50/503, H01M 50/51, H01M 50/514, H01M 50/533, H01M 50/54, H01M 50/548

(54) **CELLULE POUR ACCUMULATEUR À ARRANGEMENT OPTIMISÉ**

(30) Priorité: 02.12.2022 FR 2212683
(71) Demandeur: Ampere SAS, 92100 Boulogne-Billancourt (FR)
(72) Inventeur: BESNARD, Nicolas, 78084 Guyancourt Cedex (FR); LERAY, David, 78084 Guyancourt Cedex (FR)
(74) Mandataire: Renault Group

(57) **Abrégé**

L'invention se rapporte à une cellule (1) pour accumulateur comprenant une pochette (11) à l'intérieur de laquelle des électrodes (2) et des films séparateurs (3) sont arrangés sous la forme de :
- une pluralité d'électrodes (2) sensiblement planes, positives et négatives, disposées en alternance selon deux groupes respectifs déterminés par polarité, chacun comprenant une languette (21) de contact respective disposée à une des extrémités des électrodes (2),
- des films séparateurs (3) plans positionnés entre chacune des électrodes (2),
caractérisé en ce que les languettes (21) de contact respectives des électrodes (2) traversent l'épaisseur de la pochette (11) et sont repliées contre celle-ci, de sorte que les languettes (21) de contact des électrodes (2) positives sont au niveau d'une surface (111) externe de la pochette (11) opposée à la surface (112) externe contre laquelle les languettes (21) de contact des électrodes (2) négatives sont repliées.

## Description

La présente invention se rapporte au domaine des accumulateurs électriques et plus particulièrement au domaine des accumulateurs électriques pour véhicules.

Lors de leurs constructions, les accumulateurs électriques sont réalisés sous la forme d'un ensemble de cellules électriques individuelles réunies à l'intérieur d'un bloc logement, de sorte que ces différentes cellules soient connectées entre elles par l'intermédiaire de bornes respectives pour stocker et restituer de l'énergie électrique. Ces cellules à l'intérieur du bloc logement se trouvent ainsi individuellement réalisées sous la forme d'un arrangement aplati comportant à l'une de leurs extrémités une paire de languettes dans le prolongement plan du corps de la cellule

formant des bornes respectives de connexion. La connexion de ces différentes cellules entre elles s'opère ainsi, par un montage en série, par l'intermédiaire de ces languettes formant des éléments de connexion respectivement positif et négatif pour chacune des cellules.

Ces languettes en extrémités de cellules présentent ainsi la forme de deux excroissances qui dépassent du corps de la cellule pour interagir avec des languettes homologues de cellules juxtaposées. Cependant, même à l'intérieur d'un bloc logement, de telles languettes sont structurellement des éléments de fragilité par rapport au reste du corps des cellules. En effet, en cas de choc, le risque d'une rupture au niveau de la jonction entre la languette et le corps de la cellule est susceptible de survenir. Par ailleurs, il convient de relever que, à l'intérieur du bloc logement, la portion du logement occupée par la paire de languettes dans le prolongement du corps de la cellule n'est alors pas dédié à un stockage d'énergie électrique mais est uniquement destinée à la connexion des cellules entre elles.

La présente invention a pour but de pallier ces inconvénients en proposant une solution qui limite les risques de vulnérabilité des cellules positionnées à l'intérieur d'un bloc logement, tout en permettant d'opérer une optimisation du volume dédié au stockage d'énergie électrique à l'intérieur d'un bloc logement pour ces cellules.

L'invention concerne une cellule pour accumulateur comprenant une pochette à l'intérieur de laquelle des électrodes et des films séparateurs sont arrangés sous la forme de :
- pluralité d'électrodes sensiblement planes, d'une part, positive et, d'autre part, négative, disposées en alternance et formant deux groupes respectifs déterminés par leurs polarités, chacun des groupes d'électrodes comprenant une languette de contact respective disposée à une des extrémités des électrodes,
- des films séparateurs plans positionnés entre chacune des électrodes, caractérisé en ce que les languettes de contact respectives des électrodes traversent l'épaisseur de la pochette et sont repliées de part et d'autre de ladite pochette, de sorte que les languettes de contact repliées des électrodes positives soient positionnées au niveau d'une surface externe de la pochette opposée à une autre surface externe au niveau de laquelle les languettes de contact des électrodes négatives sont repliées.

L'invention porte également sur un bloc accumulateur comprenant un carter, caractérisé en ce que le bloc comprend au moins deux cellules selon l'invention logées à l'intérieur du carter de façon à être juxtaposées parallèlement entre elles et maintenues en compressions, de sorte que, d'une part, les languettes de contact repliées des électrodes positives d'une première cellule soient en contact électrique avec un bornier positif et que, d'autre part, les languettes de contact repliées des électrodes négatives d'une seconde cellule soient en contact électrique avec un bornier négatif, les au moins deux cellules étant connectées en série entre les deux borniers, positif et négatif, du bloc accumulateur.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

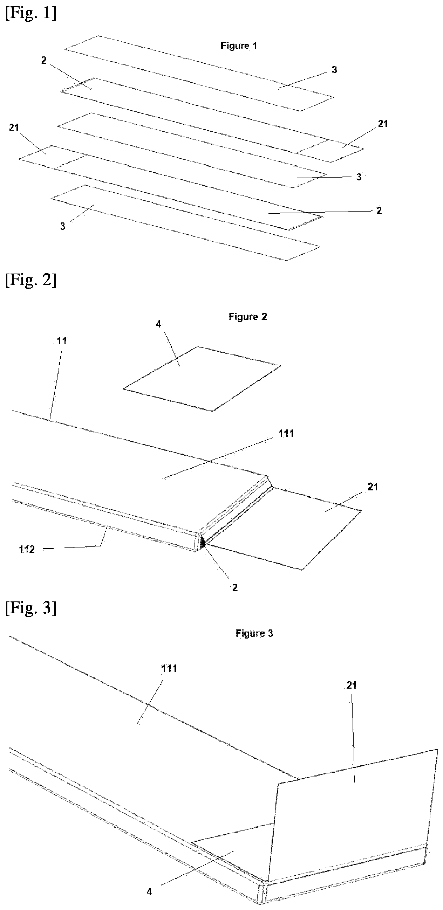

[Fig.1] représente une illustration schématique d'un exemple de regroupement d'électrodes et de films séparateurs dans une cellule selon l'invention,
[Fig.2] représente une illustration schématique d'un exemple d'arrangement d'une languette de contact contre une surface de pochette d'électrodes et de films séparateurs dans une cellule selon l'invention,
[Fig.3] représente une illustration schématique d'un exemple de repliement d'une languette de contact contre une surface de pochette d'électrodes et de films séparateurs dans une cellule selon l'invention,

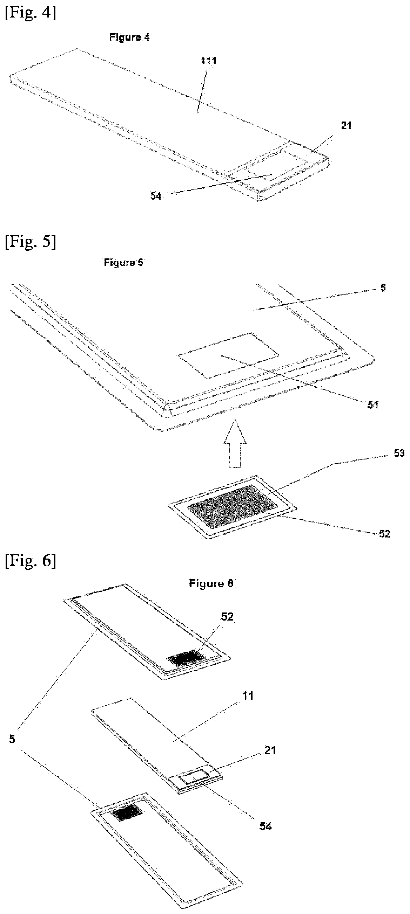

[Fig.4] représente une illustration schématique d'un exemple de d'arrangement d'une languette de contact d'électrodes associé à un renfort dans une cellule selon l'invention,
[Fig.5] représente une illustration schématique d'un exemple d'arrangement d'une extrémité d'enveloppe pour une cellule selon l'invention,
[Fig.6] représente une illustration schématique d'un exemple d'assemblage d'éléments d'enveloppe avec une pochette d'électrodes et de films séparateurs pour une cellule selon l'invention,

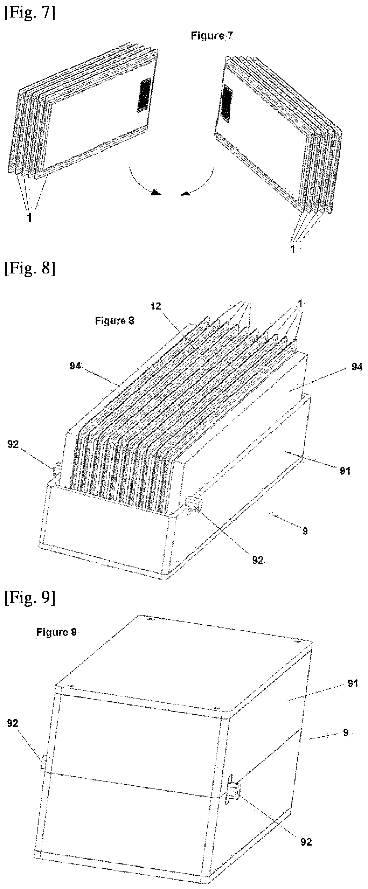

[Fig.7] représente une illustration schématique d'un exemple d'assemblage de cellules pour un bloc accumulateur selon l'invention,
[Fig.8] représente une illustration schématique d'un exemple d'assemblage de cellules et d'éléments de compression dans un carter pour la réalisation d'un bloc accumulateur selon l'invention,
[Fig.9] représente une illustration schématique d'un exemple de bloc accumulateur selon l'invention.

La présente invention porte sur une cellule 1 pour accumulateur comprenant une pochette 11 à l'intérieur de laquelle des électrodes 2 et des films séparateurs 3 sont arrangés sous la forme de :
- une pluralité d'électrodes 2 sensiblement planes, d'une part, positive et, d'autre part, négative, disposées en alternance et formant deux groupes respectifs déterminés par leurs polarités, chacun des groupes d'électrodes 2 comprenant une languette 21 de contact respective disposée à une des extrémités des électrodes 2,
- des films séparateurs 3 plans positionnés entre chacune des électrodes 2,
   caractérisé en ce que les languettes 21 de contact respectives des électrodes 2 traversent l'épaisseur de la pochette 11 et sont repliées de part et d'autre de ladite pochette 11, de sorte que les languettes 21 de contact repliées des électrodes 2 positives soient positionnées au niveau d'une surface 111 externe de la pochette 11 opposée à une autre surface 112 externe au niveau de laquelle les languettes 21 de contact des électrodes 2 négatives sont repliées.

Par leur repliement contre les surfaces 111, 112 externes de la pochette 11 qui enveloppe les électrodes 2 et films séparateurs 3, ces languettes 21 planes sont appuyées contre la surface 111, 112 externe de la cellule 1 de façon à faire disparaitre toute portion de vulnérabilité au niveau de la jonction entre les languettes 21 et le reste de la cellule 1. En effet, chacune des languettes 21 et leurs jonctions respectives avec le corps de la cellule 1 épouse la surface 111, 112 externe de la cellule 1 de façon à limiter la présence d'aspérités ou de variations de surface susceptibles d'augmenter le risque d'arrachement ou de dégradation de la languette 21 par rapport au reste de la structure de la cellule 1. De plus, le repliement des languettes 21 respectives des électrodes positives et négatives au niveau de surfaces 111, 112 différentes et opposées de la pochette 11 de cellule 1 autorise notamment un montage en série de plusieurs cellules 1 homologues selon l'invention juxtaposées.

Par ailleurs, il convient de relever que le repliement des languettes 21 planes contre les surfaces 111, 112 externes de la pochette 11 de la cellule 1 permet de restreindre voire supprimer la portion dédiée aux languettes dans la longueur de la cellule 1. Ainsi, à l'intérieur du logement réalisé par un bloc accumulateur 9, la cellule 1 de l'invention est en mesure de comprendre un corps dont la surface externe est réalisée par la pochette 11 qui présente une longueur plus importante, de façon à occuper l'espace laissé vacant par les différentes languettes 21 repliées. Ainsi, le repliement des languettes 21 contre les surfaces 111, 112 externes de la pochette 11 autorise la construction de cellules 1 dans lesquelles la partie destinée au stockage d'énergie électrique est plus importante que dans les cellules de l'art antérieur, tout en permettant l'installation de ces cellules 11 à capacité de stockage plus importante dans des blocs accumulateurs 9 existants.

Il convient de relever que, à l'intérieur de la pochette 11, les différents électrodes 2 et films séparateurs 3 plans sont susceptibles de correspondre à des électrodes 2 et films séparateurs 3 de type connu. Les électrodes 2 sont ainsi susceptibles d'être réalisés, par exemple, à base de graphite pour l'électrode de polarité négative et à base d'un oxyde de nickel manganèse et cobalt lithié pour l'électrode de polarité positive. De même, ces électrodes 2 sont susceptibles d'être associées à un ou plusieurs électrolytes liquide ou solide, à l'intérieur de la cellule 1.

Selon un exemple correspondant à une variante de construction susceptible d'être combinée avec le mode de construction précédemment détaillé, au moins un isolant 4 est disposé entre les languettes 21 de contact d'électrodes 2 repliées et les surfaces 111, 112 correspondantes de la pochette 11. Cet isolant 4 réalise une interface entre la surface de la languette 21 et la surface 111, 112 correspondante de la pochette 11, de façon à éviter une connexion électrique parasite entre la languette 21 et la surface 111, 112 de la pochette 11. Cet isolant 4 présente ainsi une surface de dimensions au moins supérieures aux dimensions de la surface de la languette 21 repliée susceptible d'être en appui contre la surface 111, 112 correspondante de la pochette 11. A titre d'exemple, cet isolant 4 est susceptible d'être réalisé en polymère, téflon, acrylonitrile butadiène styrène également dénommé ABS.

Selon un exemple correspondant à une autre variante de construction également susceptible d'être combinée avec chacune des variantes précédemment détaillées, les électrodes 2 présentent des formes planes sensiblement rectilignes et similaires avec des languettes 21 de contact respectives en extrémité de sorte que, dans l'arrangement d'électrodes 2 et de films séparateurs 3, la languette 21 de contact des électrodes 2 positives est positionnée à une extrémité opposée à celle de la languette 21 de contact des électrodes 2 négatives. Selon cet exemple de construction, le positionnement des languettes 21 de contact au niveau d'extrémités et de surfaces respectives de la cellule 1 autorise une installation tête-bêche de cellules 1 homologues selon l'invention juxtaposées de sorte que ces cellules 1 opèrent une connexion électrique par l'intermédiaire de l'une de leurs languettes 21. Cet arrangement des languettes 21 de contact au niveau d'extrémités différentes de la cellule 1 permet également une juxtaposition de plusieurs cellules 1 selon un montage électrique en série à l'intérieur d'un bloc accumulateur 9 sans qu'un phénomène de répartition en éventail ne survienne du fait du positionnement des languettes 21 de contact au niveau de la même extrémité de la cellule 1.

Selon un autre exemple correspondant à une autre variante de construction également susceptible d'être combinée avec chacune des variantes précédemment détaillées, la cellule 1 comprend également une enveloppe 5 étanche à l'intérieur de laquelle la pochette 11 se trouve logée, de sorte qu'au niveau d'au moins l'une de ses faces, l'enveloppe 5 comprend un orifice 51 obturé par une interface de contact conductrice 52, éventuellement en association avec un cadre isolant 53, cet orifice 51 et l'interface de contact conductrice 52 étant disposés en regard de languettes 21 de contact repliées d'électrodes 2 respectives. Selon cet exemple de construction, l'orifice 51 est thermoscellé au niveau de son bord périphérique avec l'interface de contact conductrice 52. Selon une variante spécifique, la jonction entre le bord de l'orifice 51 et l'interface de contact conductrice 52 fait intervenir un cadre isolant 53 réalisée dans un matériau adapté pour éviter toute conduction électrique parasite entre l'interface de contact conductrice 52 et la surface de l'enveloppe 5. Ainsi, le cadre isolant 53, d'une part, est positionné et scellé le long de l'ensemble du bord intérieur de l'orifice 51 de l'enveloppe 5 et, d'autre part, entoure de façon étanche le pourtour de l'interface de contact conductrice 52. Il convient de relever que la surface intérieure de l'interface de contact conductrice 52 est arrangée pour être en contact électrique avec l'une des deux languettes 21 de contact d'électrodes 2, négatives ou positives de la cellule 1. De façon préférentielle, l'enveloppe 5 de la cellule 1 comprend deux orifices 51 respectivement positionnés au niveau de surfaces opposées de façon à ce que les interfaces de contact conductrices 52 associées à chacun de ces orifices soit positionnées en vis-à-vis d'une languette 21 de contact d'électrodes 2 respective est avec laquelle un contact électrique est réalisé, de sorte que la surface extérieure de chaque interface de contact conductrice 52 forme la surface de contact électrique, négative ou positive, de la cellule 1 avec un élément extérieur à l'enveloppe 5. Les éléments positionnés à l'intérieur de l'enveloppe 5 n'opère ainsi aucun contact direct avec les éléments extérieurs. Les contacts électriques entre les électrodes 2, positives et négatives, de la cellules 1 et l'extérieur sont réalisés par l'intermédiaire de la paire de languettes 21 respectivement associées avec une interface de contact conductrice 52. Aussi, l'enveloppe 5 demeure totalement étanche tout en permettant des échanges électriques avec l'extérieur au niveau de la paire d'orifices 51 associés aux interfaces de contact conductrices 52 respectives. Ainsi, la connexion électrique entre deux cellules 1 juxtaposées s'opère par l'intermédiaire de ces interfaces de contact conductrices 52 portées par des cellules 1 respectives et positionnées en vis-à-vis l'une de l'autre.

Selon un autre exemple correspondant à une variante particulière de la variante précédemment détaillée, l'interface de contact conductrice 52 qui obture l'orifice 51 de l'enveloppe 5 comprend un arrangement comportant un relief présentant une hauteur supérieure à l'épaisseur l'enveloppe 5 de façon à être apte à coopérer avec une interface de contact conductrice 52 portée par une cellule 1 homologue juxtaposée. La conduction électrique entre une languette 21 de contact d'électrodes 2 et l'extérieur doit être effectuée au travers de l'épaisseur de l'enveloppe 5 au niveau des orifices 51. Pour s'assurer d'une connexion de l'interface de contact conductrice 52 au niveau de chacune de ses surfaces, il convient que l'épaisseur effective de l'interface de contact conductrice 52 positionnée au niveau des orifices 51 soit supérieure à l'épaisseur de l'enveloppe 5. Aussi, au moins une des surfaces de l'interface de contact conductrice 52 comprend un relief, notamment la surface de l'interface de contact conductrice 52 dont le pourtour est fixé à l'orifice 51 de l'enveloppe 5. Ce relief présente alors une hauteur ou épaisseur adaptée pour traverser l'orifice 51 de l'enveloppe 5 et ainsi permettre un contact électrique efficace qui soit en mesure de s'affranchir de l'épaisseur de l'enveloppe 5.

Selon un autre exemple correspondant à une autre variante de construction également susceptible d'être combinée avec chacune des variantes précédemment détaillées, la cellule 1 comprend au moins un renfort 54 de contact fixé à l'une des languettes 21 de contact d'électrodes repliées et apte à coopérer avec la surface intérieure d'une interface de contact conductrice 52 fixée à l'enveloppe 5. Ce renfort 54 de contact est réalisée dans un matériau conducteur de façon à ne pas limiter les échanges électriques entre la languette 21 et l'interface de contact conductrice. De plus, ce renfort 54 de contact présente une rigidité supérieure à celle d'une languette 21 de façon à être en mesure de supporter d'éventuels efforts mécaniques sous l'effet d'une pression exercée au travers de l'interface de contact conductrice 52, tout en évitant à la languette 21 de contact d'électrode 2 de faire l'objet d'une quelconque dégradation consécutive à ces efforts mécaniques. Le renfort 54 est ainsi fixé sur la surface de la languette 21 de contact correspondante préalablement au positionnement de l'association des électrodes 2 et films séparateurs 3 à l'intérieur de l'enveloppe 5 de la cellule 1.

Selon un autre exemple correspondant à une autre variante de construction également susceptible d'être combinée avec chacune des variantes précédemment détaillées, l'enveloppe 5 est réalisée par coopération de deux demi-coquilles assemblées entre elles par soudure sur leur périphérie. L'enveloppe 5 présentant un arrangement sensiblement plan, chacune des demi-coquilles présente également un arrangement sensiblement plan et intègre un orifice 51 associé à une interface de contact conductrice 52 éventuellement en association avec un cadre isolant 53.

L'invention concerne également sur un bloc accumulateur 9 comprenant un carter 91, caractérisé en ce que le bloc accumulateur 9 comprend au moins deux cellules 1 selon l'invention logées à l'intérieur du carter 91 de façon à être juxtaposées parallèlement entre elles et maintenues en compressions, de sorte que, d'une part, la languette 21 de contact repliée des électrodes 2 positives d'une première cellule 1 soient en contact électrique avec un bornier 92 positif et que, d'autre part, la languette 21 de contact repliée des électrodes 2 négatives d'une seconde cellule 1 soient en contact électrique avec un bornier 92 négatif, les au moins deux cellules 1 étant connectées en série entre les deux borniers 92, positif et négatif, du bloc accumulateur 9. A titre d'exemple, le carter 91 du bloc accumulateur 9 est susceptible d'être construit sous la forme de deux moitiés de carter 91 qui, une fois assemblées, réalisent le logement permettant de réceptionner les au moins deux cellules 1. Le maintien en compression des cellules 1 à l'intérieur du carter 91 du bloc accumulateur 9 fait intervenir des moyens élastiques spécifiquement destinés à conserver la position des cellules 1 en appui l'une contre l'autre et en contact électrique, notamment au niveau de leurs interfaces de contact conductrices 52. Ces moyens élastiques sont susceptibles de correspondre à des plaques de compression 94 associés à des éléments ressorts qui opèrent un serrage par pincement des cellules 1 juxtaposées en contact entre elles par leurs surfaces principales.

Le montage des cellules 1 en série à l'intérieur du carter 91 du bloc accumulateur 9 permet d'opérer une jonction électrique sensiblement linéaire entre les deux borniers 92 par la succession des cellules 1. Ainsi, selon un exemple correspondant à une variante de construction susceptible d'être combinée avec le mode de construction précédemment détaillé, les cellules 1 présentant des arrangements sensiblement plans, ces cellules 1 sont juxtaposées à l'intérieur du carter 91 en étant en appui par leurs surfaces, de sorte que, par compression, la languette 21 de contact repliée des électrodes 2 positives d'une cellule 1 est en contact électrique avec la languette 21 de contact repliée des électrodes 2 négatives d'une autre cellule 1 juxtaposée.

Selon un exemple correspondant à une variante de construction susceptible d'être combinée avec la variante de construction précédemment détaillée, au moins une barre de raccordement est positionnée comme contacteur intermédiaire au niveau de la jonction électrique entre la languette de contact 21 repliée des électrodes 2 positives d'une cellule 1 et la languette de contact 21 repliées des électrodes 2 négatives d'une autre cellule 1 juxtaposée et connectée en série avec la première cellule 1. Cette barre de raccordement est ainsi susceptible d'optimiser mécaniquement et électriquement la jonction entre au moins deux cellules 1 juxtaposées. De plus, de par sa forme allongée, la barre de raccordement est susceptible de permettre une connexion électrique entre, d'une part, les languettes 21 de contact des électrodes 2 identiques, positives ou négatives, respectives de plusieurs cellules 1 et, d'autre part, la languette 21 de contact des électrodes 2 opposées d'une autre cellule 1 juxtaposée.

Selon un exemple correspondant à une variante de construction susceptible d'être combinée avec chacun des différents modes de construction précédemment détaillés, les cellules 1 présentant des arrangements sensiblement plans, ces cellules 1 regroupées à l'intérieur du carter 91 du bloc accumulateur 9 en ensembles 12 juxtaposés, les cellules 1 étant en appui par leurs interfaces de contact conductrices 52 respectives à l'intérieur de chaque ensemble 12 et connectées en série, de sorte que la languette 21 de contact des électrodes 2 positives d'une cellule 1 soient en contact électrique avec la languette 21 de contact des électrodes négatives d'une autre cellule 1 juxtaposée, au moins une barre de raccordement étant positionnée comme contacteur intermédiaire entre deux paires de cellules 1 respectivement disposées dans deux ensembles 12 juxtaposés. Une telle barre de raccordement permet ainsi d'opérer une connexion en parallèle de plusieurs cellules 1 positionnées à l'intérieur du carter 92 du bloc accumulateur 9. Les deux ensembles 12 juxtaposés se rapportent ainsi à deux regroupements de cellules 1 disposés en compression parallèlement entre eux.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Cellule (1) pour accumulateur comprenant une pochette (11) à l'intérieur de laquelle des électrodes (2) et des films séparateurs (3) sont arrangés sous la forme de :
- une pluralité d'électrodes (2) sensiblement planes, d'une part, positive et, d'autre part, négative, disposées en alternance et formant deux groupes respectifs déterminés par leurs polarités, chacun des groupes d'électrodes (2) comprenant une languette (21) de contact respective disposée à une des extrémités des électrodes (2),
- des films séparateurs (3) plans positionnés entre chacune des électrodes (2),
**caractérisé en ce que** les languettes (21) de contact respectives des électrodes (2) traversent l'épaisseur de la pochette (11) et sont repliées de part et d'autre de ladite pochette (11), de sorte que les languettes (21) de contact repliées des électrodes (2) positives soient positionnées au niveau d'une surface (111) externe de la pochette (11) opposée à une autre surface (112) externe au niveau de laquelle les languettes (21) de contact des électrodes (2) négatives sont repliées.

2. Cellule (1) selon la revendication 1, **caractérisée en ce qu'**au moins un isolant (4) est disposé entre les languettes (21) de contact de électrodes (2) repliées et les surfaces (111, 112) correspondantes de la pochette (11).

3. Cellule (1) selon la revendication 1 ou 2, **caractérisée en ce que** les électrodes (2) présentent des formes planes sensiblement rectilignes et similaires avec des languettes (21) de contact respectives en extrémité de sorte que, dans l'arrangement de électrodes (2) et de films séparateurs (3), la languette (21) de contact des électrodes (2) positives est positionnée à une extrémité opposée à celle de la languette (21) de contact des électrodes (2) négatives

4. Cellule (1) selon une des revendications 1 à 3, **caractérisée en ce que** la cellule (1) comprend également une enveloppe (5) étanche à l'intérieur de laquelle la pochette (11) se trouve logée, de sorte qu'au niveau d'au moins l'une de ses faces, l'enveloppe (5) comprend un orifice (51) obturé par une interface de contact conductrice (52), éventuellement en association avec un cadre isolant (53), cet orifice (51) et l'interface de contact conductrice (52) étant disposés en regard de languettes (21) de contact repliées de électrodes (2) respectives.

5. Cellule (1) selon la revendication 4, **caractérisée en ce que** l'interface de contact conductrice (52) qui obture l'orifice (51) de l'enveloppe (5) comprend un arrangement comportant un relief présentant une hauteur supérieure à l'épaisseur l'enveloppe (5) de façon à être apte à coopérer avec une interface de contact conductrice (52) portée par une cellule (1) homologue juxtaposée.

6. Cellule (1) selon une des revendications 1 à 5, **caractérisée en ce que** la cellule (1) comprend au moins un renfort (54) de contact fixé à l'une des languettes (21) de contact d'électrodes repliées et apte à coopérer avec la surface intérieure d'une interface de contact conductrice (52) fixée à l'enveloppe (5).

7. Cellule (1) selon une des revendications précédentes, **caractérisé en ce que** l'enveloppe (5) est réalisée par coopération de deux demi-coquilles assemblées entre elles par soudure sur leur périphérie.

8. Bloc accumulateur (9) comprenant un carter (91), **caractérisé en ce que** le bloc accumulateur (9) comprend au moins deux cellules (1) selon une des revendications 1 à 7 logées à l'intérieur du carter (91) de façon à être juxtaposées parallèlement entre elles et maintenues en compressions, de sorte que, d'une part, la languette (21) de contact repliée des électrodes (2) positives d'une première cellule (1) soient en contact électrique avec un bornier (92) positif et que, d'autre part, la languette (21) de contact repliée des électrodes (2) négatives d'une seconde cellule (1) soient en contact électrique avec un bornier (92) négatif, les au moins deux cellules (1) étant connectées en série entre les deux borniers (92), positif et négatif, du bloc accumulateur (9).

9. Bloc accumulateur (9) selon la revendication 8, **caractérisé en ce que**, les cellules (1) présentant des arrangements sensiblement plans, ces cellules (1) sont juxtaposées à l'intérieur du carter (91) en étant en appui par leurs surfaces, de sorte que, par compression, la languette (21) de contact repliée des électrodes (2) positives d'une cellule (1) est en contact électrique avec la languette (21) de contact repliée des électrodes (2) négatives d'une autre cellule (1) juxtaposée.

10. Bloc accumulateur (9) selon la revendication 9, **caractérisé en ce que** au moins une barre de raccordement est positionnée comme contacteur intermédiaire au niveau de la jonction électrique entre la languette de contact (21) repliée des électrodes (2) positives d'une cellule (1) et la languette de contact (21) repliées des électrodes (2) négatives d'une autre cellule (1) juxtaposée et connectée en série avec la première cellule (1).

11. Bloc accumulateur (9) selon une des revendications 8 à 10, **caractérisé en ce que**, les cellules (1) présentant des arrangements sensiblement plans, ces cellules (1) regroupées à l'intérieur du carter (91) du bloc accumulateur (9) en ensembles (12) juxtaposés, les cellules (1) étant en appui par leurs interfaces de contact conductrices (52) respectives à l'intérieur de chaque ensemble (12) et connectées en série, de sorte que la languette (21) de contact des électrodes (2) positives d'une cellule (1) soient en contact électrique avec la languette (21) de contact des électrodes négatives d'une autre cellule (1) juxtaposée, au moins une barre de raccordement étant positionnée comme contacteur intermédiaire entre deux paires de cellules (1) respectivement disposées dans deux ensembles (12) juxtaposés.
